Europäisches Patentamt

European Patent Office

Office européen des brevets

(19)

(11) Publication number: **0 133 027**
**B1**

# (12) EUROPEAN PATENT SPECIFICATION

(45) Date of publication of patent specification: **11.05.88**

(51) Int. Cl.⁴: **G 11 B 7/08**

(21) Application number: **84305096.4**

(22) Date of filing: **26.07.84**

(54) Optical information reproducing apparatus.

(30) Priority: **29.07.83 JP 139965/83**
**30.07.83 JP 140139/83**

(43) Date of publication of application:
**13.02.85 Bulletin 85/07**

(45) Publication of the grant of the patent:
**11.05.88 Bulletin 88/19**

(84) Designated Contracting States:
**AT DE FR GB NL**

(56) References cited:
**EP-A-0 079 109**
**DE-A-2 512 321**
**DE-A-2 652 701**
**DE-A-3 301 787**
**GB-A-1 468 253**

(73) Proprietor: **SONY CORPORATION**
**7-35 Kitashinagawa 6-Chome Shinagawa-ku**
**Tokyo 141 (JP)**

(72) Inventor: **Yamakawa, Akio c/o Sony**
**Corporation**
**7-35 Kitashinagawa 6-chome**
**Shinagawa-ku Tokyo (JP)**

(74) Representative: **Haigh, Charles Roy et al**
**J.A. KEMP & CO. 14 South Square Gray's Inn**
**London WC1R 5EU (GB)**

The file contains technical information
submitted after the application was filed and
not included in this specification

Courier Press, Leamington Spa, England.

## Description

The present invention generally relates to optical information reproducing apparatus and more particularly is directed to an optical information reproducing apparatus for reproducing information recorded on a recording surface of an optical disc such as an optical video disc, a so-called compact disc and so on.

Generally in an optical disc reproducing apparatus, a laser beam is focussed on the recording surface of an optical disc by an objective lens so as to reproduce a signal recorded thereon. In this case, its resolution is determined by how much a laser beam is converged, or the diameter of beam spot so that the maximum value of the diameter of beam spot is selected to be less than a certain value. The diameter of beam spot is determined by the wavelength of a laser light from its source and the ratio between the focal length of an objective lens and its diameter (this ratio is generally presented as an NA (numerical aperature) value) and so on.

By the way, in the art a helium-neon laser is used as a light source. This helium-neon laser, however, causes the apparatus to become large in size and expensive. Accordingly, it is a recent trend that a semiconductor laser is used as the light source because it is inexpensive and suitable for making the apparatus compact in size.

However, the semiconductor laser uses a 780 nm wavelength which is longer than 623.8 nm, the wavelength of the helium-neon laser. For this reason, in order to establish a diameter of beam spot of the semiconductor laser which can provide the same resolution as that using the helium-neon laser as the light source, NA value of objective lens must be increased to, for example, about 0.5.

However, if the NA value of the objective lens is increased as described above, when the optical axis of the laser beam is not perpendicular to the recording surface of a disc, crosstalk components from adjacent tracks on the disc become a serious problem.

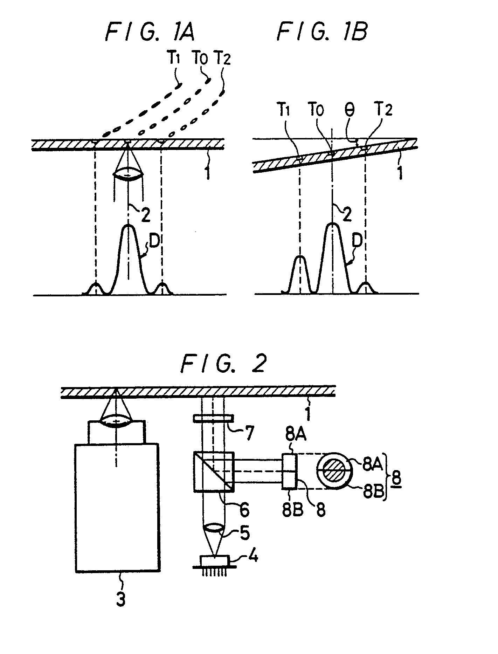

As shown in Fig. 1A, when an optical axis 2 of a laser beam is perpendicular to the recording surface of a disc 1, a detected output D in its light receiving section becomes as shown in Fig. 1A in which crosstalk components from adjacent tracks $T_1$ and $T_2$ are small enough relative to the output from a main track $T_0$. However, as shown in Fig. 1B, when the otpical axis 2 of the laser beam is not perpendicular to the recording surface of the disc 1 (this condition will hereinafter be referred to as the skew of the disc 1), the crosstalk components from the adjacent tracks $T_1$ and $T_2$, in this case, the crosstalk component from the track $T_1$ in the detected output D becomes large.

When the NA value becomes large, the crosstalk level Lc can not be neglected as will be clear from the relation expressed as

$$Lc \propto Wcm \propto \frac{NA^3}{\lambda} \cdot \theta$$

where Wcm is coma aberration, $\lambda$ the wavelength of the laser beam and $\theta$ a skew angle in the radial direction of the disc.

For example, under the condition that $\lambda$ is 780 nm, track pitch is 1.67 μm and NA is 0.5, in order to establish the crosstalk level Lc=−40 dB, the condition of $\theta \leq 0.5°$ has to be satisfied.

The skew of the disc at which the optical axis of the laser beam is not made perpendicular to the recording surface of the disc may be caused by the tilting or bending of a spindle shaft, the tilting or bending of a turntable of the disc, the skew of the disc itself and so on. The main cause is considered as the skew of the disc itself, and at present the skew angle $\theta$ in the radial direction of the disc itself is typically $1° \leq \theta \leq 2°$. For this reason, when the semiconductor laser is used as the light source, it is necessary to detect the skew of the disc in the radius direction thereof (including skews other than the skew of the disc itself) and to cope with the increase of crosstalk components. The term skew will be used in the same sense hereinafter.

In order to cope with the increase of crosstalk components, there have been previously proposed the following methods.

In one of such prior art methods, as shown in Fig. 2, independent from a light source of an optical pick up device 3, a laser 4 is provided as a light source. A bundle of light from this laser 4 is made incident on a disc 1 as a parallel light through a collimator lens 5, a polarizing beam splitter (PBS) 6 and a 1/4 wavelength plate 7 and then reflected thereon. The reflected light is introduced through the 1/4 wavelength plate 7 and the PBS 6 to and detected by a two-divided photo detector 8. In this case, the skew of the disc 1 is detected as the difference between the detected outputs from divided areas 8A and 8B of the divided photo detector 8.

However, this method requires not only the laser 4 as its light source but also the collimator lens 5, the PBS 6 and the 1/4 wavelength plate 7 so that this method involves much cost. Moreover, since this method uses the parallel light, at the position where the content of the recorded information on the disc 1 is changed or at the position where, in case of the recorded information being, for example, a video signal, the content of picture is changed, the reflectivity of the disc is changed, so that the skew of the disc 1 is erroneously detected.

DE—A—2652701 discloses a skew detector in which converging light is directed towards an optical disc and projected on a split photo detector.

EP—A—79109 discloses an apparatus in accordance with the precharacterising part of claim 1.

It is an object of the present invention to provide an improved optical information reproducing apparatus for reproducing information recorded on a recording surface of a disc shape record medium.

It is another object of the present invention to provide an optical information reproducing apparatus using a disc skew detector which is small in the number of parts and low at cost.

It is a further object of the present invention to provide an optical information reproducing apparatus using a disc skew detector which does not detect erroneously a skew of the disc at the portion where the content of information recorded on the disc is changed.

It is a still further object of the present invention to provide an optical information reproducing apparatus having a disc skew detector which does not require a polarized beam splitter, a 1/4 wavelength plate, a collimator lens and so on.

It is a yet further object of the present invention to provide an optical information reproducing apparatus having a disc skew detector in which instead of a parallel light, a diffusion light is used, the source of this diffusion light is positioned on the focal plane of a lens, a disc is faced to a far field portion thereof and a reflected light thereon is focused through the lens, so that when an information recorded on the disc is, for example, a video signal, even if the content of the picture is changed, such changed content of picture can not be erroneously detected as a skew of the disc.

According to the present invention, there is provided an optical information reproducing apparatus for reproducing information recorded on a recording surface of a disc shape record medium comprising:

an optical pick up device mounted on a tiltable optical block and having a laser beam source for generating a laser beam and a photo detector for detecting the reflected beam from said recording surface and for reading the recorded information;

a skew error detector mounted on said tiltable optical block and for detecting a skew of the record medium; and a skew error corrector controlled by the output of said skew error detector and for controlling said optical block so that the optical axis of said pick up device is maintained to be perpendicular to the recording surface, characterised in that said skew error detector includes a diffusion light source, a divided photo detector and a lens, the difference between the light amounts detected in use by areas of said divided photo detector representing the skew error output of said skew error detector, said light source and said divided photo detector being arranged symmetrical with respect to an axis parallel with the optical axis of said optical pick up device, the light irradiated from said light source being passed through said lens to said recording surface and the light reflected from the recording surface being directed to said divided photo detector through said lens in such a manner that a real image of said diffusion light source is formed on said divided photo detector and the light in the light paths from said lens to the recording surface and from said recording surface to the lens is parallel light.

The above and other features and advantages of the present invention will become apparent from the following description taken in conjunction with the accompanying drawings through which the like references designate the same elements and parts.

Figs. 1A and 1B are respectively diagrams useful for explaining a bad influence caused by a skew of a disc;

Fig. 2 is a diagram showing an example of a previously proposed skew detector;

Figs. 3 to 5 are respectively diagrams showing an arrangement of an example of a skew detector which although not per se embodying the present invention will be useful to assist in understanding the invention;

Fig. 6 to Figs. 9A to 9C are respectively diagrams useful for explaining the operation thereof;

Figs. 10 to 13 are respectively diagrams showing an embodiment of the skew detector used in the present invention;

Fig. 14 to Figs. 17A to 17C are respectively diagrams useful for explaining the operation thereof;

Fig. 18 is a perspective view showing an example of a mechanism which controls an optical axis of an optical pick up device to be always maintained perpendicular to a recording surface of a disc;

Fig. 19 is a block diagram showing a control system for the mechanism shown in Fig. 18; and Figs. 20 to 23 are respectively diagrams and graphs showing shapes of an image of a diffusion light source and detected output characteristics thereof.

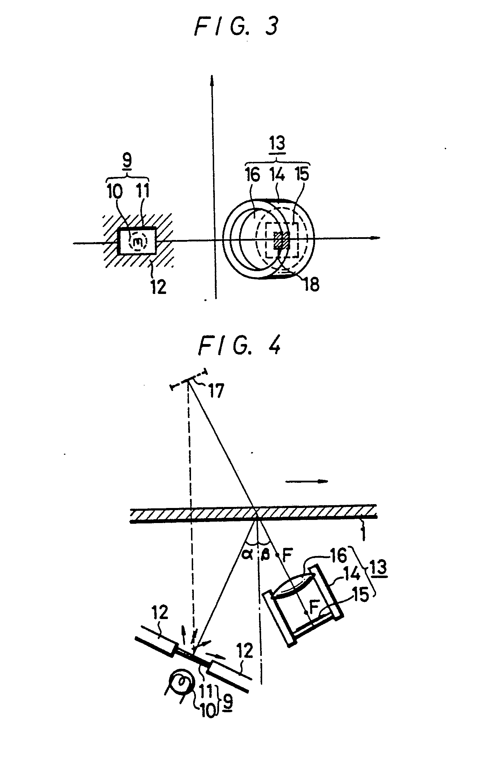

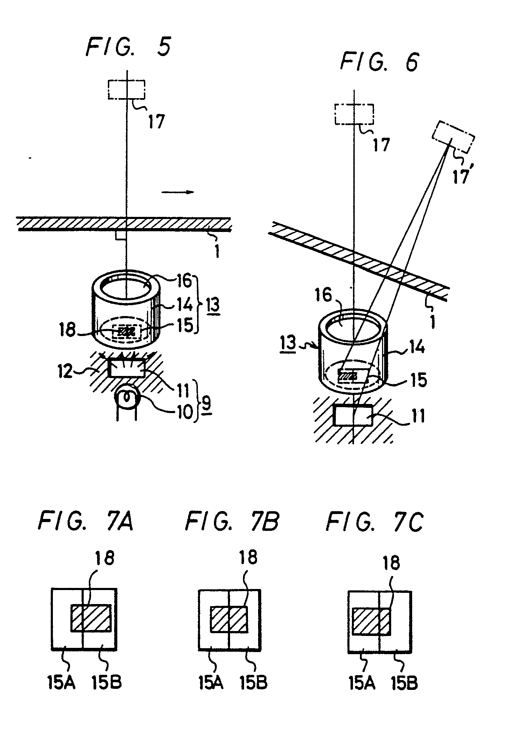

Figs. 3 to 5 are respectively diagrams showing a further example of a skew detector for detecting a skew of a disc. Fig. 3 is a diagram showing the skew detector viewed from the upper surface side of the disc 1 (the disc 1 is not shown). Fig. 5 is a side diagram showing the skew detector viewed from the direction perpendicular to the radius direction of the disc 1 (nearly cross-sectional diagram for convenience sake of explanation). And, Fig. 4 is a side diagram showing the skew detector viewed from the direction along the radius direction of the disc 1.

In Figures 3 to 5, a diffusion light source is used as the light source, and in the example shown in Figs. 3 to 5, a diffusion light source 9 is formed of a lamp 10 and a diffusion plate 11. In this case, the diffusion plate 11 is formed as a window of quadrilateral shape and the periphery of this window is masked by a light shielding portion 12.

Further, there is provided a light receiving device 13 which receives the light which is emitted from the diffusion light source 9 and reflected by the disc 1. In this example, the light receiving device 13 consists of a cylindrical member 14, a divided photo detector 15 disposed at its bottom portion and a condenser lens 16 supported by the cylindrical member 14 between the photo detector 15 and the recording surface of the disc 1.

The diffusion light source 9 and the light receiving device 13 are respectively disposed in the direction perpendicular to the direction in which the skew of the disc 1 is detected. In this example, since the skew of the disc 1 in its radius direction is detected, the diffusion light source 9 and the light receiving device 13 are both disposed in the direction perpendicular to the radius direction of the disc 1 as shown in Fig. 3. Further, the diffusion light source 9 and the light receiving device 13 are disposed such that, within the plane perpendicular to the recording surface of the disc 1 in the case where the optical axis of an optical pick up device (not shown) is perpendicular to the recording surface of the disc 1, the optical axis of the light receiving device 13 and the direction (hereinafter called the optical axis of the diffusion light source 9) perpendicular to the diffusion plate 11 are both contained. Also, the above optical axes intersect with each other on the recording surface of disc 1 and, the diffusion light source 9 and the light receiving device 13 are made symmetrical to each other with respect to the direction perpendicular to the recording surface. In other words, as shown in Fig. 4, the diffusion light source 9 and the light receiving device 13 are disposed such that angles α and β formed by the intersection of the direction perpendicular to the recording surface of the disc 1 to both the optical axes satisfy the condition of α=β.

The direction of the divided line of the divided photo detector 15 is made coincident with the direction perpendicular to the radius direction of the disc 1.

In Fig. 4, reference letter F designates a position of the focus of the condenser lens 16, and the positional relation among the condenser lens 16, the photo detector 15 and the diffusion light source 9 is set so as to focus the real image of the diffusion light source 9 on the photo detector 15.

Thus, a virtual image of the diffusion light source 9 is formed at the position shown by reference numeral 17 in Figs. 4 and 5, while a real image 18 of the diffusion light source 9 is focussed on the photo detector 15 as shown by hatched area in Figs. 3 and 5.

In this case, when the surface including the optical axis of the condenser lens 16 and the optical axis of the diffusion light source 9 and the recording surface of the disc 1 are perpendicular to each other as shown in Fig. 4, the real image 18 of the diffusion light source 9 is focussed on the divided photo detector 15 so as to occupy the divided areas 15A and 15B with the same amount as shown in Fig. 7B. Accordingly, the photo-detected outputs from the divided areas 15A and 15B are equal to each other and hence the difference therebetween is zero.

When, as shown in Fig. 6, the plane including the optical axis of the condenser lens 16 and the optical axis of the diffusion light source 9 is not perpendicular to the recording surface of the disc 1 due to the skew of the disc 1, the position of the virtual image of the diffusion light source 9 is displaced to the direction perpendicular to the tilted disc 1 as shown at 17' in Fig. 6 so that the real image 18 of the diffusion light source 9 is focussed on the photo detector 15 so as to occupy the area 15A with larger amount of area than the area 15B as shown in Fig. 7C.

When the disc 1 is tilted in the way opposite to that in Fig. 6, or when the disc 1 has the skew that its recording surface is tilted with its left-hand side being down in Fig. 6, the image 18 of the diffusion light source 9 is focussed on the photo detector 15 so as to occupy the divided area 15B with larger amount of area than the divided area 15A as shown in Fig. 7A.

As described above, on the basis of the difference between the detected outputs of the optical images 18 from the respective regions 15A and 15B of the divided photo detector 15, it is possible to detect the direction and amount of the skew of the disc 1.

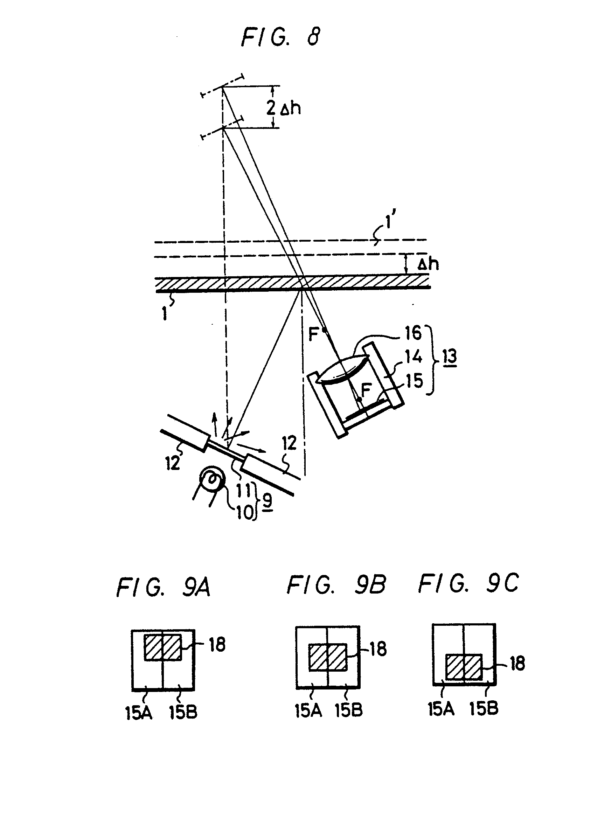

In this case, although the disc 1 has no skew, when the relation of height between the disc 1 and the diffusion light source 9 and the light receiving device 13 is changed as shown by broken lines at 1' in Fig. 8, the real image 18 on the photo detector 15 becomes such that it occupies the areas 15A and 15B with the equal amount of area but is displaced only along the direction of the divided line between the areas 15A and 15B as shown in Figs. 9A, 9B and 9C. In this case, since the diffusion light source 9 is used as the light source, unlike the parallel light of laser, the real image 18 becomes out of focus due to the change of height of the disc 1. However, the distance between the diffusion light source 9 and the condenser lens 16 is larger than the distance between the condenser lens 16 and the photo detector 15 (image) so that even if the height of the disc 1 is changed, the image 18 on the photo detector 15 does not become out of focus so much.

According to the example of the skew detector shown in Figs. 3 to 5, the skew detector becomes physically large in size, so that there may be a fear that a problem will occur when the skew detector is assembled into the optical information reproducing apparatus in practice.

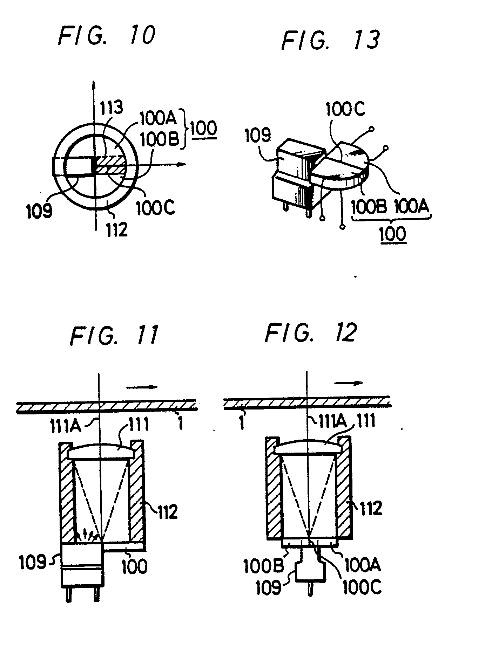

Another form of the skew detector, which is free from the above fear, embodying this invention will be explained with reference to Figs. 10 to 13. The skew detector of this embodiment can physically be made small in size with the same effect as that of the above example being achieved.

Fig. 10 is a diagram showing the skew detector as seen from the upper surface side of the disc 1 (the disc 1 is not shown), Fig. 11 is a diagram (nearly cross-sectional diagram for convenience sake of explanation) of the skew detector as seen along the radius direction of the disc 1 and Fig. 12 is a diagram (also nearly cross-sectional diagram for convenience sake of explanation) of the above skew detector as seen from the direction perpendicular to the radius direction of the disc 1, respectively, i.e. chordally of the disc.

In this example, the diffusion light source is also used as the light source, and in the example shown in Figs. 10 to 12 is used a light emission diode 109 as the light source in which the light is diffused on its light emission surface. In this example, the light emission surface of the light emission diode 109 is formed as a rectangular shape (square shape).

Further, there is provided a photo detector 100 which receives through a lens 111 the light emitted from the light emission diode 109 and reflected by the disc 1. This photo detector 100 is the divided photo detector having two detecting areas 100A and 100B.

In this case, the light emission diode 109, the photo detector 100 and the lens 111 are attached to a housing member 112 formed of a cylindrical body. That is, the lens 111 is disposed at one, otherwise open, end of the housing member 112, while the light emission diode 109 and the photo detector 100 are disposed at the other, otherwise open, end of the housing member 112 such that they are located on the focal plane of the lens 111 and separated from each other in the left- and right-hand sides on the surface including the optical axis 111A of the lens 111 as the boundary. Then, the housing member 112 which incorporates the light emission diode 109, the photo detector 100 and the lens 111 as mentioned above is positioned such that the lens 111 is disposed at the side of the disc 1 and that the light emission diode 109 and the photo detector 100 are aligned in the direction perpendicular to the skew detecting direction of the disc 1 as shown in, for example, Figs. 10 and 11. In this example, since the skew of the disc 1 in its radius direction is detected, the light emission diode 109 and the photo detector 100 are located in the direction perpendicular to the radius direction of the disc 1 as set forth just above. Moreover, in this case, the housing member 112 is so arranged that the optical axis 111A of the lens 111 is perpendicular to the recording surface of the disc 1 to which the optical axis of the optical pick up device (not shown) is perpendicular, too. Further, the dividing line 100C of the divided photo detector 100 is positioned in the direction perpendicular to the skew detecting direction, namely, in the direction perpendicular to the radius direction of the disc 1. In addition, the divided line 100C crosses the surface which includes the optical axis 111A of the lens 111.

Fig. 13 is a perspective view showing only the light emission diode 109 and the divided photo detector 100.

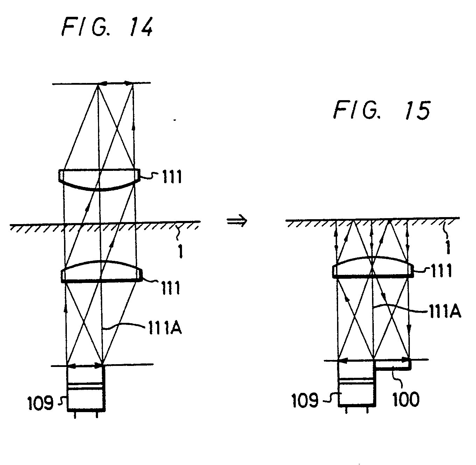

With the arrangement thus made, the real image of the surface portion of the light emission diode 109 is focussed on the photo detector 100 as an image 113 hatched in Fig. 10. The principle for this will be described with reference to Figs. 14 and 15.

When the optical axis 111A of the lens 111 and the recording surface of the disc 1 are perpendicular to each other, the optical paths of the light incident on the recording surface of the disc 1 and of the reflected light therefrom are completely symmetrical and become as shown in Fig. 14. As a result, the real image of the light emission diode 109 positioned nearer to the left-hand side than the surface including the optical axis 111A of the lens 111 and being positioned along the radius direction of the disc 1 is focussed on the focal plane of the lens 111 at the right-hand side of the above surface as shown in Fig. 14. In Fig. 14, the portion above the disc 1 is a portion which is reflected by the recording surface of the disc 1 so that if the portion is reflected on the recording surface of the disc 1, Fig. 14 become as shown in Fig. 15. From Fig. 15 it will be clear that the real image of the light emission surface portion of the light emission diode 109 is focussed just at the position of the photo detector 100.

In the state that the otpical axis 111A of the lens 111 is perpendicular to the recording surface of the disc 1 as shown in Fig. 14, the optical image 113 is focussed on the divided photo detector 100 so as to occupy the divided areas 100A and 100B with the same amount of area as shown in Fig. 17B. Thus, the detected outputs from the divided areas 100A and 100B are equal to each other, resulting in no difference therebetween.

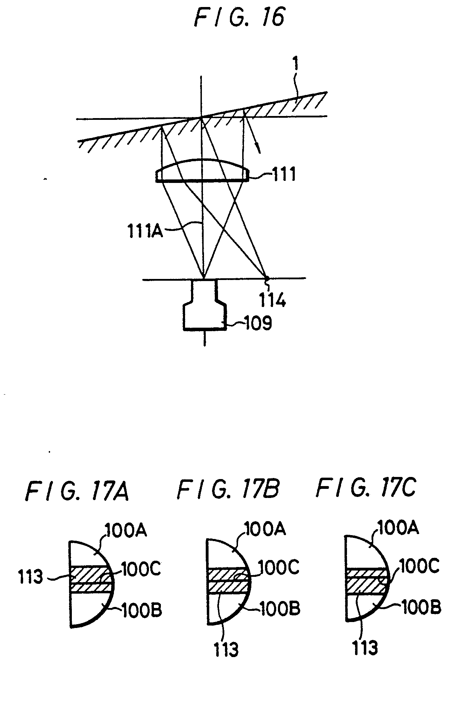

When the optical axis 111A of the lens 111 becomes not perpendicular to the recording surface of the disc 1 due to the skew of the disc 1 as shown in Fig. 16, the position of the optical image of the light emission diode 109 is displaced in the direction perpendicular to the radius direction of the disc 1 by the tilted disc 1 as shown by reference numeral 114 in Fig. 16. As a result, the optical image 113 is so formed on the photo detector 100 that it occupies the area 100B with a larger amount of area than that of the area 100A as shown in Fig. 17C.

When the disc 1 has a skew opposite to that of Fig. 16, or when the recording surface of the disc 1 is tilted down in its right-hand side in Fig. 16, the optical image 113 is so formed on the photo detector 100 that it occupies the area 100A with a larger amount of area than that of the area 100B as shown in Fig. 17A.

As described above, on the basis of the difference between the detected outputs of the optical image 113 from the respective areas 100A and 100B of the photo detector 100, it is possible to detect the direction and amount of the skew of the disc 1.

According to the present invention, the skew detector for detecting the skew of the disc 1 mentioned as above is used to control the optical axis of the optical pick up device to always be perpendicular to the recording surface of the disc 1 by the manner described as follows.

By way of example, the manner in which the skew detector of Figures 3 to 5 is used will be described. In this case, the diffusion light source 9 and the light receiving device 13 shown in Figs. 3 to 5 are moved together with the optical pick up device, keeping the above relation relative to the optical pick up device.

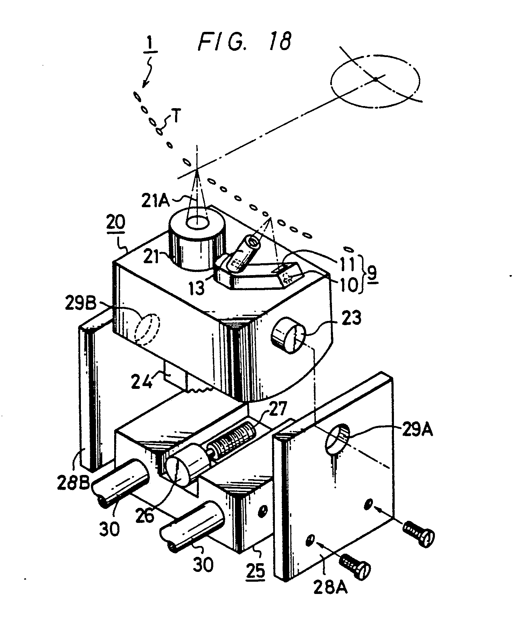

Fig. 18 is a diagram showing an example of a movable section which includes the optical pick up device and the skew detector mentioned above.

In Fig. 18, reference numeral 20 generally designates an optical block which incorporates therein an optical system of the optical pick up device for detecting an information recorded on the disc 1 as pits and the optical system for detecting skew of the disc 1. Focusing servo control and tracking servo control for the optical system of the optical pick up device are carried out by a biaxial optical driving section 21 in the same way as in the prior art. Then, with respect to an optical axis position 2A of the optical system of the optical pick up device, the light receiving device 13 and the diffusion light source 9 are mounted to the optical block 20 as the skew error detector in the longitudinal direction of a recording track T on the disc 1. Accordingly, the plane including the optical axis of the lens 16 (not shown) and the optical axis of the diffusion light source 9 also includes the optical axis 21A of the optical pick up device.

The whole of the optical block 20 thus made is supported by a shaft 23 which extends in the direction perpendicular to the radius direction of the disc 1, and the optical block 20 can be tilted in the radius direction of the disc 1.

More specifically, in this example, a worm gear 24 is mounted on the bottom surface of the optical block 20, and in order that the worm gear 24 is engaged with a worm 27 rotated by a small motor 26 provided on a support base 25, both ends of the shaft 23 are rotatably inserted into two shaft apertures 29A, 29B formed through a pair of side plates 28A, 28B. Accordingly, when the worm 27 is rotated by the motor 26, the worm gear 24 is rotated by a rotation angle corresponding to the rotation of the worm 27 so that the optical block 20 is tilted in the radius direction of the disc 1. Thus, if the motor 26 is controlled by the detected output of the skew of the disc 1, the optical axis 21A of the optical pick up device can be controlled to be always perpendicular to the recording surface of the disc 1.

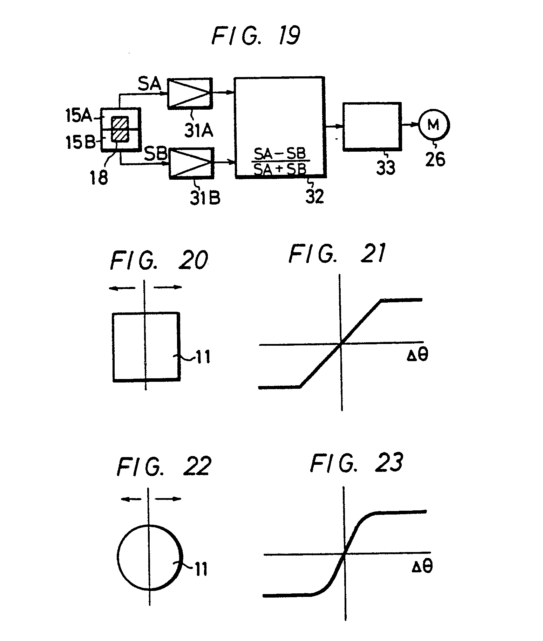

Fig. 19 is a block diagram showing an example of a control system for controlling the motor 26. As shown in Fig. 19, detected outputs SA and SB from the divided areas 15A and 15B of the divided photo detector 15, which are proportional to the light amounts which the optical image 18 occupy the respective divided areas 15A and 15B are respectively supplied through amplifiers 31A and 31B to a calculating circuit 32. This calculating circuit 32 performs the following calculation

$$\frac{SA-SB}{SA+SB} \qquad \text{(a)}$$

The calculated output from the calculating circuit 32 is supplied through a drive circuit 33 to the motor 26. Thus, the motor 26 is controlled in rotation in proportion to the difference SA−SB between the respective detected outputs SA and SB so that the feedback is applied to the motor 26 so as to satisfy the condition, SA−SB=0. In other words, the optical axis 21A of the optical pick up device is always maintained to be perpendicular to the recording surface of the disc 1.

Even if the optical image 18 becomes out of focus due to the change of height of the disc 1, the motor 26 is controlled on the basis of the ratio of the difference (SA−SB) between the detected outputs SA and SB of the respective areas 15A, 15B relative to the total light amount, (SA+SB) of the optical image 18 as expressed by the equation (a) so that the motor 26 can be controlled without being affected by the defocussed optical image 18, namely, the change of height of the disc 1.

In the above example, it is desirable that the shape of the diffusion plate 11 which is substantially focussed on the photo detector 15 as the optical image of the diffusion light source 9 is rectangular as shown in Fig. 20. The reason for this is that as shown in the graph of Fig. 21, the skew detected output relative to the skew angle Δθ becomes of a straight line. On the contrary, if the shape of the diffusion plate 11 is circular as shown in Fig. 22, the skew detected output relative to the skew angle Δθ becomes of a curve line as shown in the graph of Fig. 23 so that it becomes difficult to control the rotation of the motor 26.

In addition, it is needless to say that the diffusion light source 9 is not limited to a diffusion light source which uses the diffusion plate and the lamp.

Although Figs. 18 to 23 illustrate the use of the skew detector of Figs. 3 to 5 it will be apparent that the embodiment of the skew detector shown in Figs. 10 to 13 can be similarly used with the same or better effects.

As described above, according to the present invention, since the diffusion light source is used as the light source, the light emitted from the diffusion light source is reflected once on the disc and the real image thereof is formed on the divided photo detector by the condenser lens to thereby detect the skew of the disc, it is possible to realize an optical information reproducing apparatus with a smaller number of parts and at lower cost than those of the prior art which uses the laser as the light source.

Furthermore, since the light is not a parallel light but a diffused light, even the portion where the content of the information recorded on the disc is changed can never be erroneously detected unintentionally as the skew of the disc.

**Claims**

1. An optical information reproducing apparatus for reproducing information recorded on a recording surface of a disc shape record medium (1) comprising:
an optical pick up device (3) mounted on a tiltable optical block (20) and having a laser beam source for generating a laser beam and a photo detector for detecting the reflected beam from said recording surface and for reading the recorded information;
a skew error detector (Figs. 10—13) mounted on said tiltable optical block (20) and for detecting a skew of the record medium (1); and a skew error corrector (Fig. 19) controlled by the output of said skew error detector and for controlling said optical block so that the optical axis of said pick up device is maintained to be perpendicular to the recording surface, characterised in that said skew error detector includes a diffusion light source (109), a divided photo detector (100) and a lens (111), the difference between the light amounts detected in use by areas of said divided photo detector (100) representing the skew error output of said skew error detector, said light source (109) and said divided photo detector (100) being arranged symmetrical with respect to an axis parallel (111A) with the optical axis of said optical pick up device (3), the light irradiated from said light source (100) being passed through said lens (111) to said recording surface and the light reflected from the recording surface being directed to said divided photo detector (100) through said lens in such a manner that a real image (113) of said diffusion light source (109) is formed on said divided photo detector (100) and the light in the light paths from said lens to the recording surface and from said recording surface to the lens is parallel light.

2. An optical information reproducing apparatus according to claim 1, wherein said skew error detector further includes a calculating circuit (32) supplied in use with the outputs of the both areas of said divided photo detector (100) and for generating the output signal proportional to the division of the difference between the outputs by the sum of the outputs.

3. An optical information reproducing apparatus according to claim 1 or 2, wherein said diffusion light source (109) has the rectangular shaped exit of light so that the real image formed on said divided photo detector is a rectangular image.

4. An optical information reproducing apparatus according to claim 1, 2 or 3, wherein said diffusion light source (109), divided photo detector (100) and lens (111) are mounted in a common housing (112).

**Patentansprüche**

1. Gerät zur Wiedegabe optischer Informationen, die auf einer Aufzeichnungsfläche eines scheibenförmiges Aufzeichnungsmediums (1) aufgeziechnet sind,

mit einer an einer kippbaren optischen Baugruppe (20) montierten optischen Abtastvorrichtung (3), die eine Laser-Strahlungsquelle zur Erzeugung eines Laserstrahls und einen Photodetektor zur Erfassung des von der Aufzeichnungsfläche reflektierten Strahls und zum Lesen der aufgezeichneten Information aufweist,

mit einem an der kippbaren optischen Baugruppe (20) montierten Schräglagenfehler-Detektor (10 bis 13) zur Erfassung einer Schräglage des Aufzeichnungsmediums (1)

sowie mit einer von dem Ausgangssignal des Schräglagenfehler-Detektors gesteuerten Schräglagenfehler-Korrektureinrichtung (Fig. 19) zur Steuerung der optischen Baugruppe derart, daß die optische Achse der Abtastvorrichtung senkrecht zu der Aufzeichnungsfläche gehalten wird, dadurch gekennzeichnet,

daß der Schräglagenfehler-Detektor eine diffuse Lichtquelle (109), einen geteilten Photodetektor (100) und eine Linse (111) enthält und die Differenz der beim Gebrauch von Flächen des geteilten Photodetektors (100) erfaßten Lichtmengen das Schräglagenfehler-Ausgangssignal des Schräglagenfehler-Detektors darstellt,

daß die Lichtquelle (109) und der geteilte Photodetektor (100) symmetrisch zu einer Achse (111A) angeordnet sind, die parallel zur optischen Achse der optischen Abtastvorrichtung (3) verläuft,

daß das von der Lichtquelle (109) ausgestrahlte Licht durch die Linse (111) auf die Aufzeichnungsfläche übertragen und das von der Aufzeichnungsfläche reflektierte Licht in der Weise auf den geteilten Photodetektor (100) gerichtet wird, daß auf diesem ein reelles Bild (113) der diffusen Lichtquelle (109) erzeugt wird und das Licht in dem Strahlenweg von der Linse zu der Aufzeichnungsfläche und von der Aufzeichnungsfläche zu der Linse paralles Licht ist.

2. Gerät zur Wiedegabe optischer Informationen nach Anspruch 1, bei dem der Schräglagenfehler-Detektor ferner eine Rechenschaltung (32) enthält, die beim Einsatz mit den Ausgangssignalen der beiden Flächen des geteilten Photodetektors (100) beaufschlagt wird und ein Ausgangssignal erzeugt, das dem Quotienten aus der Differenz und der Summe dieser Ausgangssignale proportional ist.

3. Gerät zur Wiedegabe optischer Informationen nach Anspruch 1 oder 2, bei dem die diffuse Lichtquelle (109) einen rechteckförmigen Lichtaustritt besitzt, so daß das auf dem geteilten Photodetektor erzeugte reelle Bild ein rechteckiges Bild ist.

4. Gerät zur Wiedegabe optischer Informationen nach Anspruch 1, 2 oder 3, bei dem die diffuse Lichtquelle (109), der geteilte Photodetektor (100) und die Linse (111) in einem gemeinsamen Gehäuse (112) montiert sind.

**Revendications**

1. Un appareil de reproduction d'information optique destiné à reproduire une information enregistrée sur une surface d'enregistrement d'un support d'enregistrement en forme de disque (1), comprenant:

un capteur optique (3) monté sur un bloc optique inclinable (20) et comportant une source de faisceau laser destinée à produire un faisceau laser, et un photodétecteur destiné à détecter le faisceau réfléchi sur la surface d'enregistrement et à lire l'information enregistrée;

un détecteur d'erreur d'obliquité (figures 10—13) monté sur le bloc optique inclinable (20) et destiné à détecter une obliquité du support d'enregistrement (1); et un correcteur d'erreur d'obliquité (19) qui est commandé par le signal de sortie du détecteur d'erreur d'obliquité et qui a pour but de commander le bloc optique de façon à maintenir l'axe du capteur perpendiculaire à la surface d'enregistrement, caractérisé en ce que le détecteur d'erreur d'obliquité comprend une source lumineuse diffuse (109), un photodétecteur divisé (100) et une lentille (111), la différence détectée pendant l'utilisation entre les quantités de lumière reçues par des zones du photodétecteur divisé (100) représente le signal de sortie d'erreur d'obliquité du détecteur d'erreur d'obliquité, la source lumineuse (109) et le photodétecteur divisé (100) sont disposés symétriquement par rapport à un axe (111A) parallèle à l'axe optique du capteur optique (3), la lumière émise par la source lumineuse (100) traverse la lentille (111) pour atteindre la surface d'enregistrement, et la lumière réfléchie par la surface d'enregistrement est dirigée vers le photodétecteur divisé (100) à travers la lentille, d'une manière telle qu'une image réelle (113) de la source lumineuse diffuse (109) se forme sur le photodétecteur divisé (100), et la lumière qui se propage dans les chemins de lumière allant de la lentille à la surface d'enregistrement et de la surface d'enregistrement à la lentille est de la lumière parallèle.

2. Un appareil de reproduction d'information optique selon la revendication 1, dans lequel le détecteur d'erreur d'obliquité comprend en outre un circuit de calcul (32) qui reçoit pendant l'utilisation les signaux de sortie des deux zones du photodétecteur divisé (100), et qui produit le signal de sortie proportionnel au quotient de la différence entre les signaux de sortie des deux zones, par la somme de ces signaux de sortie.

3. Un appareil de reproduction d'information optique selon la revendication 1 ou 2, dans lequel la source lumineuse diffuse (109) présente une surface d'émission de lumière de forme rectangulaire, de façon que l'image réelle formée sur le photodétecteur divisé soit une image rectangulaire.

4. Un appareil de reproduction d'information optique selon la revendication 1, 2 ou 3, dans lequel la source lumineuse diffuse (109), le photodétecteur divisé (100) et la lentille (111) sont montés dans un boîtier commun (112).

FI G. 1A

FI G. 1B

FI G. 2

## F I G. 3

## F I G. 4

## FIG. 5

16
14  } 13
15
18
12
11  } 9
10
17
1

## FIG. 6

17
17'
16
13
14
15
11
1

## FIG. 7A

18
15A  15B

## FIG. 7B

18
15A  15B

## FIG. 7C

18
15A  15B

FIG. 8

FIG. 9A          FIG. 9B          FIG. 9C

## FIG. 10

## FIG. 13

## FIG. 11

## FIG. 12

## FIG. 14

## FIG. 15

## F I G. 16

## F I G. 17A    F I G. 17B    F I G. 17C

# FIG. 18

## FIG. 19

## FIG. 20

## FIG. 21

## FIG. 22

## FIG. 23